Europäisches Patentamt

European Patent Office

Office européen des brevets

(19)

(11) Publication number: 0 379 313
A1

## (12) EUROPEAN PATENT APPLICATION

(21) Application number: 90300359.8

(22) Date of filing: 12.01.90

(51) Int. Cl.5: A01K 63/06

(30) Priority: 17.01.89 GB 8900936

(43) Date of publication of application:
25.07.90 Bulletin 90/30

(84) Designated Contracting States:
BE DE ES FR GB IT LU NL

(71) Applicant: Mars G.B. Limited
3D Dundee Road
Slough Berkshire SL1 4LG(GB)

(72) Inventor: Gilleard, Peter Richard
Holmfield Bill Lane
Wooldale Huddersfield HD7 1XX(GB)

(74) Representative: Colgan, Stephen James et al
CARPMAELS & RANSFORD 43 Bloomsbury
Square
London WC1A 2RA(GB)

(54) Liquid heater.

(57) A controllable liquid heater having a heater element (3) and a temperature sensor (5) sealed within a glass container (1) for immersion in the liquid (15) to be heated, the liquid heater including a control means, characterised in that the glass container (1) is sealed by means of a settable epoxy resin (17) having a co-efficient of thermal expansion substantially the same as that of the glass over normal working temperatures. The epoxy resin base is preferably a bisphenol-A epichlorohydrin bis-(ethylene oxy) methane polymer and the resin hardener is preferably an aliphatic poly-dimethylamine type curing agent containing liquid hydrocarbons and polymethyl siloxane in a chemically inert solution.

The invention provides an improved seal around the electrical connections to the heater element tube, so that even if the heater element is submerged in an aquarium tank, for example, by the user (which is often preferable to ensure that the water temperature rather than the air temperature is sensed), the lifetime of the heater will not be substantially affected.

Fig. 1

## LIQUID HEATER

This invention relates to liquid heaters which accurately control the temperature of the liquid.

An increasingly popular hobby is the collecting of colourful tropical fish to form an aquarium. In the past, this used to be a difficult practice, conducted primarily by experts, but now it is a household pastime which is relatively easy.

In such aquaria, it is essential that the temperature of the water is kept virtually constant, since the tropical fish (which are often very expensive) are not able to withstand large changes in temperature and, in fact, many species become unhealthy simply due to a small change in temperature. Accordingly, the heating system of an aquarium is an essential part of the set up of the aquarium.

As mentioned previously, many household aquaria are no longer set up by experts, and accordingly are not always arranged in a satisfactory manner. A particular problem which is often encountered is that the whole of an aquarium heater tube is immersed in the water, even though the specific manufacturers instructions often indicate that the electrical connection end of the tube should not be submerged. The connection ends of these heater tubes are only sealed by means of rubber or cork end caps which do not form a water tight seal, and therefore allow water to enter the tube and corrode the heater elements. In this way, the lifetime of the aquarium heater is cut short unnecessarily.

It is an aim of the present invention to improve the seal around the electrical connections to the heater element tube, so that even if the heater element is submerged in the aquarium tank by the user (which is often preferable to ensure that the water temperature rather than the air temperature is sensed), the lifetime of the heater will not be substantially affected.

A major difficulty in providing a water tight seal at the end of a heater element tube is that the glass tube expands and contracts in response to the varied temperatures associated with the use and the non-use of the heater. However, the present invention alleviates this problem and results in an aquarium heater which is far superior commercially to those of the prior art.

A further problem associated with prior art liquid heaters, which include heaters for aquaria, brewery vats, and the like, is the arrangement of the essential integers of the heater system. Three prior art systems are known, as follows:

(1) A heater element attached to a power supply by means of a bi-metallic strip, the bi-metallic strip being held within a glass heater element tube by means of a cork or rubber bung. In this system, the sensitivity of the bi-metallic strip can be adjusted by means of a screw accessable to the user.

(2) A system wherein a heater element tube is immersed in the water, a temperature sensor is separately immersed in the water, and the two pieces of equipment are electrically connected to an electronic control system outside the tank, which is combined with a user adjustment control.

(3) A system wherein a heater element, a temperature sensor and an electronic control system are mounted within a glass tube which is completely immersed in the water of the aquarium tank. A user adjustement control, mounted outside the aquarium tank, is electrically connected to the glass tube.

The above-mentioned prior art systems all have their drawbacks. For example, the first one incorporates the previously mentioned problem wherein water may seep into the glass tube and corrode the metal components. The second system is commercially unfavourable since it requires three separate articles to be manufactured - the heater element, the temperature sensor, and the adjustment/control unit. The third prior art system has the disadvantage of the electronic control circuitry being submerged under water, albeit within a glass container, and the fact that the glass container is particularly bulky.

Accordingly, the present invention is designed to improve upon these prior art systems.

Furthermore, the present invention incorporates a novel electronic temperature control which is far cheaper than those used in the prior art.

According to the present invention there is provided a controllable liquid heater having a heater element and a temperature sensor sealed within a glass container for immersion in the liquid to be heated, the liquid heater including a control means, characterised in that the glass container is sealed by means of a settable resin having a co-efficient of thermal expansion substantially the same as that of the glass over normal working temperatures.

Preferably the liquid heater can be stored without damage to the resin/glass interface at temperatures between about -20°C and 40°C.

The settable resin is preferably an epoxy resin, which includes a resin base and a resin hardener. Preferably the resin base includes pigment powders, and may also include amorphous and inert fillers. The resin hardener is preferably an aliphatic poly-dimethylamine type curing agent containing liquid hydrocarbons and polymethyl siloxane in a chemically inert solution.

The resin base preferably has a molecular weight less than 700. More preferably, the resin base is a bisphenol-A epichlorohydrin bis-(ethylene oxy) methane polymer.

It will of course be appreciated that the controllable liquid heater may be used in conjunction with aquaria, brewery vats, or any other application which requires a liquid to a held at an accurately controlled raised temperature.

According to another aspect of the present invention there is provided a controllable liquid heater suitable for use with an aquarium or the like comprising a heating element, a temperature sensor, a manual adjuster and an electronic control characterised in that
the heating element and the temperature sensor are sealed within a container adapted to be immersed in liquid and the manual adjuster and electronic control are in communication with and displaced from the said container.

Preferably the container is a glass tube having an end closed by means of a settable resin.

Preferably the electronic control comprises an electronic circuit as hereinafter described.

A preferred embodiment of the present invention is now described purely by way of example with reference to the accompanying drawings in which:

Fig. 1 is a schematic diagram showing the basic components of a controllable liquid heater according to the present invention; and

Fig. 2 is a circuit diagram showing a preferred elecronic circuit incorporated in the controllable liquid heater of the present invention.

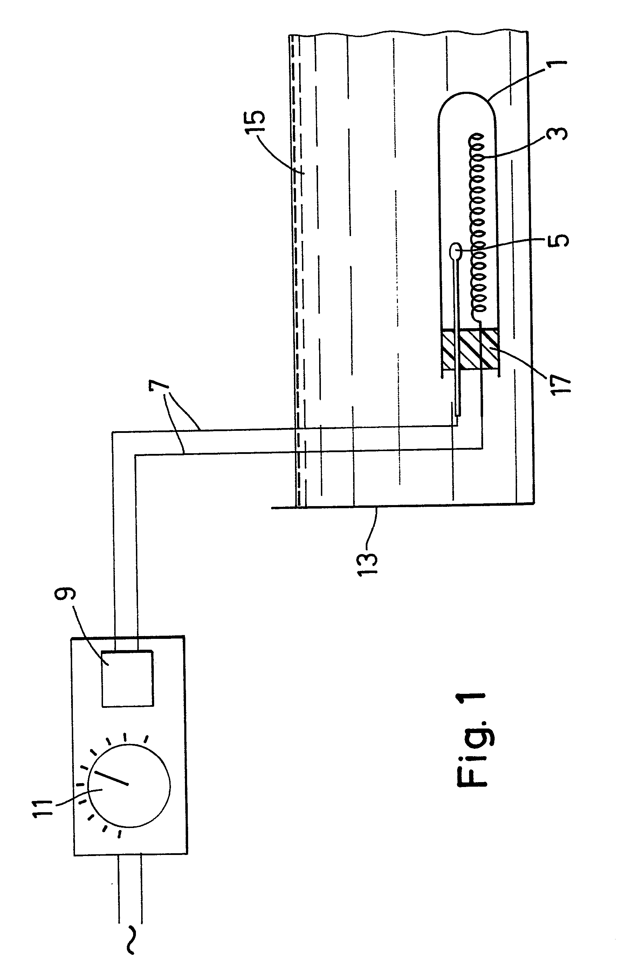

With reference to Fig. 1 of the drawings, a glass tube (1) contains a heater element (3) and a temperature sensor (5) which are in communication via electrical wires (7) (which may both be contained within a single sheath until they pass into the glass tube (1)) to an electronic control (9) and temperature adjuster (11). The glass tube (1) is positioned within an aquarium tank (13) whilst the control (9) and adjuster (11) are mounted outside the aquarium tank (13) away from the water (15).

The electrical wires (7) enter the glass tube (1) through an end which is sealed by means of a settable resin (17). The settable resin ensures that a water tight seal is produced around the electrical wires (7) such that no water from the aquarium tank (13) may enter the glass tube (1) and corrode the heater element (3) or temperature sensor (5).

The settable resin, which is a two pack solvent free epoxy resin encapsulation compound, is formed by the mixing of two liquid components which cure to form a solid compound which cannot be re-constituted and which exhibits low shrinkage and good thermal resistance properties. In a preferred embodiment of the present invention, the resin base is a bisphenol-A epichlorohydrin bis-(ethylene oxy) methane polymer with pigment powders, amorphous and inert fillers. The resin hardener is an apliphatic poly-dimethylamine type curing agent containing liquid hydrocarbons and polymethylsiloxane in a chemically inert solution.

It will of course be appreciated that other resins may be used, but it is essential that the co-efficient of thermal expansion of the resin is substantially the same as that of the tube (1), whatever material the tube is made from. This ensures that the tube does not crack or explode as the temperature varies.

The adjuster (11) is operated by the user to set the desired temperature of the aquarium water. The adjuster (11) sends signals to the electronic control unit (9) which in turn receives information from the temperature sensor (5) and controls the electrical input into the heater element (3) such that the water (15) is kept at the desired temperature.

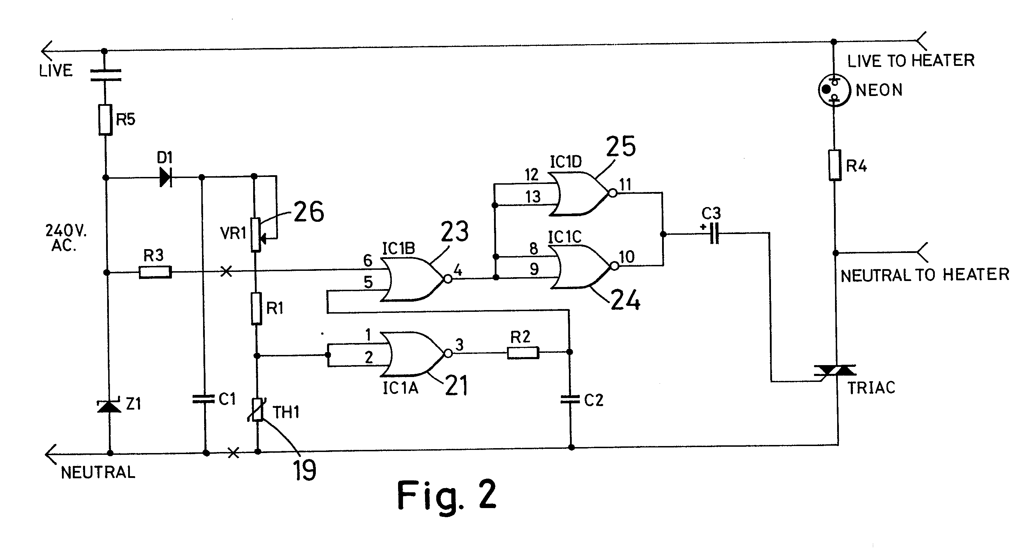

The electronic control unit (9) is best described by means of Fig 2 of the accompanying drawings which shows a schematic circuit diagram of the control unit (9). The circuit is designed to handle a load of 300 watts, but the same circuit can be used to switch loads up to or greater than 3000 watts using different output triacs and styles/sizes of heatsinks.

The temperature of the aquarium water (15) is detected using a thermistor (19) in a potential divider chain containing a potentiometer. This arrangement uses integrated circuit (21) as a high gain open loop amplifier. The IC is preferably a 4001, as are the other three NOR gates (23), (24), (25).

In use, the temperature of the aquarium water sets the resistance of the thermistor (19) which, in conjunction with the resistance of the variable resistance (26) set by means of the adjuster (11), controls the output of the electronic control (9) and hence the power made available to the heater element (3). In this way, the aquarium water may be kept at given temperature, plus or minus 2° C. In practice, however, in a suitable tank with good circulation, it has often been found that the water temperature may be kept at a given temperature plus or minus 0.5° C.

Clearly, however, the electronic circuit within the electronic control (9) may be designed differently, by making alterations which are well known to a man skilled in the art.

It will of course be understood that the present invention has described above purely by way of example and that modifications in detail can be made within the scope of the invention.

**Claims**

1. A controllable liquid heater having a heater element (3) and a temperature sensor (5) sealed within a glass container (1) for immersion in the liquid (15) to be heated, the liquid heater including a control means, characterised in that the glass container (1) is sealed by means of a settable resin (17) having a co-efficient of thermal expansion substantially the same as that of the glass over normal working temperatures.

2. A liquid heater according to claim 1, characterised in that the resin/glass interface is not damaged during storage at temperatures between -20°C and 40°C.

3. A liquid heater according to claim 1 or claim 2, characterised in that the settable resin (17) is an epoxy resin which includes a resin base and a resin hardener.

4. A liquid heater according to claim 3, characterised in that the resin base includes pigment powders.

5. A liquid heater according to claim 3 or claim 4, characterised in that the resin base includes amorphous and inert fillers.

6. A liquid heater according to any one of claims 3 to 5, characterised in that the resin hardener is an aliphatic poly-dimethylamine type curing agent containing liquid hydrocarbons and polymethyl siloxane in a chemically inert solution.

7. A liquid heater according to any one of claims 3 to 6, characterised in that the resin base has a molecular weight less than 700.

8. A liquid heater according to any one of claims 3 to 7, characterised in that the resin base is a bisphenol-A epichlorohydrin bis-(ethylene oxy) methane polymer.

9. A liquid heater according to any preceding claim including a manual adjuster (11) and an electronic control (9), characterised in that the manual adjuster (11) and electronic control (9) are in communication with and displaced from the glass container (1).

10. A liquid heater according to claim 9, characterised in that the electronic control (9) comprises an electronic circuit as hereinbefore described.

Fig. 1

Fig. 2

EP 0 379 313 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-228521 (STRADA)<br>* column 3, lines 1 - 9; figure 2 *<br>--- | 1 | A01K63/06 |
| A | US-A-3890486 (FITZGERALD)<br>* abstract; figure 1 *<br>--- | 9 | |
| A | GB-A-2165965 (KNECHTEL)<br>--- | | |
| A | GB-A-1325084 (SINGLETON)<br>--- | | |
| A | AU-B-565210 (JOHN TORN IMPORTS PTY. LIMITED)<br>--- | | |
| A | GB-A-1547765 (ARMITAGE BROTHERS LIMITED)<br>--- | | |
| A | GB-A-1449629 (INTERPET ELECTRICAL LIMITED)<br>--- | | |
| A | CH-A-269723 (SCHNEITER)<br>----- | | |
| | | | TECHNICAL FIELDS SEARCHED (Int. Cl.5)<br><br>A01K |

The present search report has been drawn up for all claims

| Place of search | Date of completion of the search | Examiner |
|---|---|---|
| THE HAGUE | 17 APRIL 1990 | VON ARX V.U. |